# FASCICULE DE BREVET EUROPEEN

(11) **EP 2 648 190 B1**
(45) Date de publication et mention de la délivrance du brevet: **01.03.2017**
(21) Numéro de dépôt: 13161851.4
(22) Date de dépôt: 29.03.2013
(51) Int. Cl.: G21C 17/00, H01F 38/14, H05B 3/12, H05B 3/40

(54) **Dispositif pour générer un gradient élevé de température dans un échantillon de type combustible nucléaire**
Vorrichtung zum Erzeugen eines hohen Temperaturgradienten in einer Probe vom Typ Kernbrennstoff
Device for generating a high temperature gradient in a nuclear fuel sample

(30) Priorité: 02.04.2012 FR 1253001
(43) Date de publication de la demande: 09.10.2013
(73) Titulaire: COMMISSARIAT A L'ENERGIE ATOMIQUE ET AUX ENERGIES ALTERNATIVES, 75015 Paris (FR)
(72) Inventeur: PONTILLON, Yves, 04860 PIERREVERT (FR); DESGRANGES, Lionel, 84120 PERTUIS (FR); HANUS, Eric, 04100 MANOSQUE (FR); BREMOND, Olivier, 83560 RIANS (FR)
(74) Mandataire: Esselin, Sophie

(56) Documents cités:
- FR-A1- 2 582 896
- FR-A1- 2 931 580
- JP-B1- S 495 689
- US-A- 4 643 866
- US-A1- 2006 283 849
- US-A1- 2008 023 141
- US-A1- 2011 176 650

## Description

Le domaine de l'invention est celui des dispositifs de chauffage comportant la génération contrôlée de gradient thermique au sein d'un échantillon trouvant notamment un intérêt particulier pour contrôler et caractériser le comportement des combustibles nucléaires sous gradient thermique et qui soit utilisable en laboratoire de haute activité nucléaire.

Dans ce domaine il a déjà été proposé par le Demandeur de produire un gradient thermique par un chauffage électrique à coeur des céramiques et une circulation d'eau à l'extérieur du gainage des céramiques. Néanmoins, ce dispositif n'a pas été utilisé sur combustibles nucléaires irradiés.

Il est également connu du brevet US 4,643,866, des moyens permettant de fournir un gradient thermique assuré pas un chauffage à coeur des céramiques à l'aide de micro-ondes et une circulation d'eau à l'extérieur du gainage des céramiques.

US 4 643 866 A décrit aussi un ensemble comprenant un échantillon et un dispositif pour générer un gradient élevé de température dans ledit échantillon; ledit dispositif comprenant: une enceinte à l'intérieur de laquelle est placé ledit échantillon; et une résistance traversant ledit échantillon.

La publication Nuclear Engineering and Design 26, (1974) 423-431, J.F. Whatham décrit par ailleurs, un chauffage électrique des céramiques avec un refroidissement par circulation d'eau pressurisée.

Actuellement, les quelques expériences de gradient thermique présentées, réalisées sur crayon combustible ont été menées sur des matériaux non irradiés en atmosphère inerte. Or les effets de l'irradiation impactent rapidement (en moins d'un cycle de réacteur à eau sous-pression : REP) les propriétés mécaniques et chimiques de la pastille et de la gaine ainsi que leur interface, modifiant de manière significative le comportement du combustible nucléaire.

Or, dans le cadre des gestions de combustibles tels que le MOX à haute teneur en Plutonium avec un vecteur isotopique dégradé, le combustible MOX (pour « Mélanges d'Oxydes ») contenant du dioxyde de plutonium PuO₂ et du dioxyde d'uranium UO₂, fabriqué à partir d'environ 7 % de plutonium et 93 % d'uranium appauvri, la connaissance des phénomènes de transfert des produits de fission, notamment gazeux, au sein du combustible et des conditions de relâchement, nécessite d'être approfondie.

Plus précisément, dans les réacteurs nucléaires actuels, exploités par EDF, les combustibles se présentent sous la forme de pastilles UO₂ ou (U,Pu)O₂ empilées dans une gaine en alliage de Zirconium. Lors de l'irradiation, il se produit notamment en raison de phénomènes thermomécaniques, une interaction entre les pastilles et la gaine (aussi appelée Interaction Pastille Gaine : IPG). Or, dans certaines conditions accidentelles de transitoires de puissance, le combustible peut subir un incrément important et rapide de température par rapport à sa situation normale. Ce transitoire thermique provoque une augmentation de la contrainte de la pastille sur la gaine et peut conduire à sa rupture. La gaine étant la première barrière de confinement aux produits de fission, il est indispensable de garantir son intégrité et donc de connaître au mieux ces phénomènes d'IPG.

Il est donc particulièrement intéressant de réaliser des expériences analytiques capables de simuler le gradient thermique subi par le combustible nucléaire lors de différentes « transitoires » de puissance et plus précisément de disposer d'un dispositif de caractérisation du comportement des combustibles nucléaires sous gradient thermique qui soit utilisable en laboratoire de haute activité. De telles expériences analytiques peuvent permettre de sélectionner des matériaux en vue d'obtenir un combustible dit remède ne conduisant pas à la rupture de la première barrière de confinement lors de certaines conditions accidentelles de transitoires de puissance.

Dans ce cadre, le Demandeur a développé un dispositif expérimental nommé DURANCE (Dispositif simUlant le compoRtement sous grAdieNt thermique des CombustiblEs). Ce dispositif DURANCE comporte un gradient thermique au sein de l'échantillon, assuré par un mandrin chauffant inséré à coeur et un système de matériaux isolants refroidis par un dispositif annexe. L'amplitude du gradient thermique entre le coeur de l'échantillon et la face externe de la gaine est, par conséquent, pilotée par le niveau de température à coeur et la nature, l'épaisseur et la température externe des isolants.

Dans ce contexte, le Demandeur a cherché à mettre au point un dispositif permettant de reproduire et maîtriser l'amplitude du gradient thermique subi par le combustible nucléaire lors de certaines situations accidentelles et ce grâce à une installation de dimension réduite facilement adaptable aux fours de traitement thermiques utilisés par le laboratoire en cellule de haute activité et ce en s'affranchissant de toute circulation d'eau (pressurisée ou non) au contact de l'élément combustible, le chauffage étant assuré par induction. Le développement d'un système de chauffage par induction pour deux à trois pastilles de combustible assurant un flux thermique de l'intérieur vers l'extérieur de celles-ci permet de représenter le profil de température observé en réacteur. Il est destiné à permettre de faire progresser la problématique liée au risque de rupture de gaine par Interaction Pastille-Gaine / Corrosion sous Contrainte (IPG/CSC) des crayons combustibles en situation incidentelle, le nombre limité d'essais intégraux de rampe de puissance ne permettant pas de tester individuellement l'ensemble des paramètres et nuances de combustible ni d'accéder de façon découplée aux phénomènes physiques. Or certains mécanismes clés intervenant dans le phénomène d'interaction de la pastille avec la gaine sont encore mal connus et constituent un facteur limitant pour la compréhension des rampes et la représentativité des modèles numériques simulant l'IPG.

Un des objectifs important du dispositif proposé dans la présente invention est donc de reproduire et de maîtriser l'amplitude du gradient thermique subi par un combustible nucléaire lors de certaines situations accidentelles et ce grâce à une installation de dimension réduite facilement adaptable aux fours de traitement thermiques utilisés par un laboratoire en cellule de haute activité et ce en s'affranchissant de toute circulation d'eau (pressurisée ou non) au contact de l'élément combustible, le chauffage étant assuré par induction.

Le dispositif de la présente invention constitue notamment une solution pouvant permettre de porter le combustible à une température centrale pouvant atteindre 2000°C, voire plus et stabiliser la température gaine aux alentours de 350°C +/- 50°C sur typiquement trois pastilles de combustible.

Plus précisément, la présente invention a pour objet un ensemble comprenant un échantillon et un dispositif pour générer un gradient élevé de température dans ledit échantillon ; ledit dispositif comprenant :
- une enceinte à l'intérieur de laquelle est placé ledit échantillon ;
- une résistante traversant ledit échantillon ;
- des premiers moyens d'induction en périphérie de l'enceinte pour créer un champ électromagnétique et
- des seconds moyens d'induction connectés à ladite résistance et capables de capter ledit champ électromagnétique de manière à créer un courant induit circulant dans ladite résistance.

Selon une variante de l'invention, les premiers moyens d'induction comprennent au moins une première bobine.

Selon une variante de l'invention, les seconds moyens comprennent au moins une seconde bobine.

Selon une variante de l'invention, l'enceinte est un tube de quartz.

Selon une variante de l'invention, l'échantillon comprend une pastille de céramique pouvant être de Al₂O₃, ou du ZrO₂ ou une pastille de combustible nucléaire pouvant être de l'UO₂ ou du MOX.

Selon une variante de l'invention, l'échantillon comprend une gaine métallique en périphérie de ladite pastille et en contact direct avec ladite pastille.

Selon une variante de l'invention, il comprend en outre un élément isolant thermique en périphérie dudit échantillon.

Selon une variante de l'invention, l'échantillon comprend une pastille de céramique, l'isolant étant en alumine.

Selon une variante de l'invention, l'échantillon comprend une pastille de céramique, l'isolant étant en hafnie.

Selon une variante de l'invention, l'échantillon comprend un combustible pouvant être en UO₂, l'isolant pouvant être en UO₂ ou en hafnie.

Selon une variante de l'invention, la résistance est en métal réfractaire pouvant être en tungstène ou en molybdène.

Selon une variante de l'invention, ledit ensemble comprend en outre un échangeur, lesdits seconds moyens d'induction étant situés en périphérie dudit échangeur.

Selon une variante de l'invention, l'échangeur comprend un système de circulation de fluide.

Selon une variante de l'invention, ledit ensemble comprend en outre des moyens de mesure de la température dudit échantillon.

Selon une variante de l'invention, les moyens de mesure de la température comprennent un thermocouple.

L'invention a aussi pour objet un ensemble selon l'invention comprenant un pyromètre.

L'invention a encore pour objet un ensemble selon l'invention comprenant une caméra infrarouge.

L'invention sera mieux comprise et d'autres avantages apparaîtront à la lecture de la description qui va suivre donnée à titre non limitatif et grâce aux figures annexées parmi lesquelles :
- la figure 1 illustre un dispositif de chauffage ou four MERARG développé par le demandeur ;
- la figure 2 illustre un dispositif selon l'invention ;
- les figures 3a et 3b illustrent des modèles géométriques de l'ensemble : pastille de combustible entouré d'isolant, chauffé notamment par un mandrin métallique dans un dispositif de l'invention ;
- la figure 4 illustre le modèle thermique d'élément fini pour une pastille de combustible entourée d'isolant ;
- la figure 5 illustre l'évolution de la température en fonction de coordonnées radiales pour différents isolants et une pastille céramique d'Alumine ;
- la figure 6 illustre l'évolution de la température en fonction de coordonnées radiales pour différents isolants et une pastille céramique de Zircone ;
- la figure 7 illustre l'évolution de la température en fonction de coordonnées radiales pour différents isolants et une pastille céramique de UO₂ ;
- la figure 8 illustre une vue éclatée de différents éléments compris dans un exemple de dispositif de l'invention ;
- la figure 9 illustre un exemple de cycle de températures appliquées au niveau de la résistance centrale dans un dispositif de l'invention.

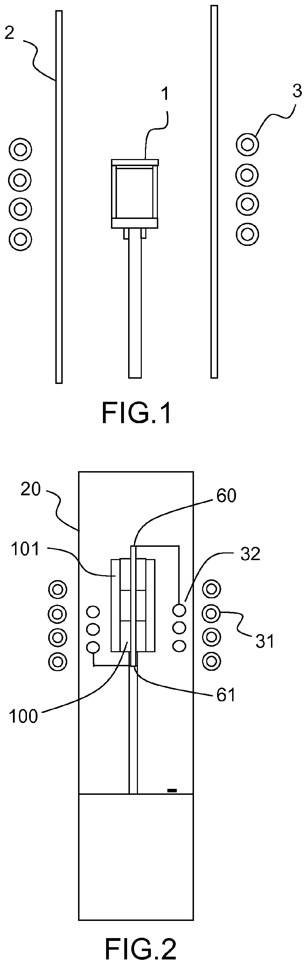

Le Demandeur a déveoppé un four MERARG tel que celui illustré en figure 1 permettant de chauffer un creuset métallique par couplage inductif. Des spires dites d'induction 3 traversées par un courant haute fréquence permettent de créer des courants induits dans le creuset métallique 1. Par effet Joule, ces courants induits chauffent ainsi les parois du creuset, qui lui-même porte un échantillon à haute température de façon isotherme, le creuset étant lui-même placé dans un tube 2.

Néanmoins, l'utilisation du chauffage par induction ne peut pas être directement transcrite au dispositif DURANCE. En effet, utiliser la résistance au centre des pastilles comme suscepteur (correspondant à la pièce à chauffer encore appelée suscepteur et de manière générale, le suscepteur doit être un conducteur électrique) vis-à-vis de l'induction n'est pas envisageable car la gaine en alliage de Zirconium (élément métallique), située entre le centre des pastilles et la spire, subirait le couplage. La gaine serait donc chauffée de la même façon que l'est le creuset dans MERARG.

Afin de pouvoir se servir du champ électromagnétique créé par des premiers moyens d'induction pouvant être une spire d'induction pour chauffer le système résistif central, la solution proposée dans la présente invention adapte le principe d'un transformateur électrique.

Le champ électromagnétique est ainsi selon la présente invention, capté par des premiers moyens d'induction pouvant être une spire (bobine) dite de transformation. Cette spire crée alors un courant dit induit qui circule dans la résistance. Cette spire est placée à l'intérieur du tube de quartz et centrée au niveau de la spire d'induction.

Ce dispositif permet bien de garder le même système d'apport de puissance. Il permet également de conserver le tube de quartz qui garantit l'étanchéité du four et qui, par ses propriétés physico-chimiques, n'interagit pas sur le phénomène de couplage.

La figure 2 illustre ainsi un dispositif de l'invention comprenant dans une enceinte 20, une résistance 60, une première spire d'induction 31 et une seconde spire dite de transformation 32. L'échantillon à échauffer 100 est entouré, d'une gaine non représentée et d'un isolant 101 et est traversé par la résistance 60 en son centre. Un thermocouple 61 est également prévu pour la mesure de température.

Le dispositif de la présente invention permet ainsi de venir chauffer par couplage inductif un élément métallique, et ensuite par échauffement résistif de la résistance 60, de chauffer l'intérieur des pastilles. Ce montage permet bien de garder le même système d'apport de puissance. Il permet également de conserver par exemple un tube de quartz qui garantit l'étanchéité du four et qui, par ses propriétés physico-chimiques, n'interagit pas sur le phénomène de couplage.

Pour que ce principe fournisse un chauffage plus homogène au sein de l'empilement des pastilles de combustible, on peut avantageusement doubler les spires de couplage et venir chauffer par induction deux éléments métalliques de part et d'autre.

### Validation thermique du système de chauffage résistif

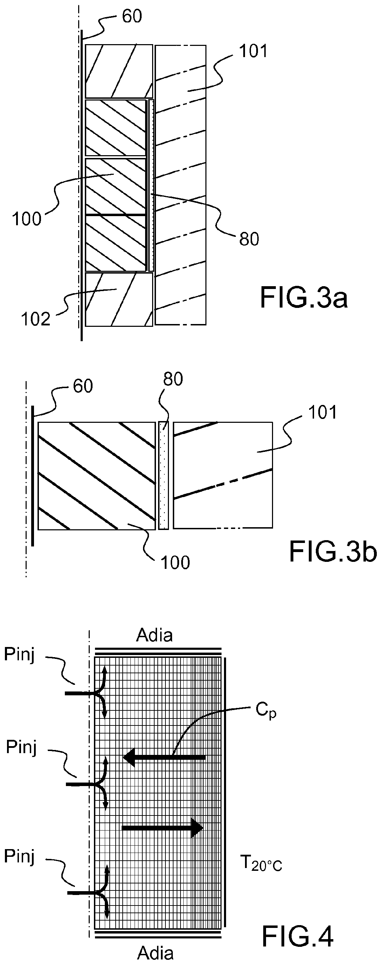

De manière générale, le dispositif DURANCE cherche à appliquer un gradient thermique radial connu et prédéterminé au sein d'une céramique nucléaire irradiée. Afin de valider le concept envisagé, le Demandeur a modélisé sous Cast3m le comportement thermique du dispositif de l'invention. Cette modélisation a permis, dans un premier temps, et au travers d'une étude paramétrique la plus simple possible, de confirmer la présence d'un gradient radial au sein des pastilles et de spécifier la nature et la géométrie des isolants pour obtenir le gradient thermique souhaité. Cette analyse détaille les hypothèses posées pour obtenir un modèle simplifié de DURANCE (définition du modèle géométrique, définition du modèle thermique, ...). Les résultats obtenus ont été confrontés aux objectifs voulus pour conclure sur la validité du concept. Il a été décidé de modéliser le dispositif DURANCE de façon axisymétrique dans un premier temps sur un empilement de trois pastilles puis, pour simplifier encore le modèle, sur seulement la pastille centrale en négligeant les effets de bord des deux pastilles d'extrémités. Il est alors considéré qu'il n'y a pas d'échange thermique sur les faces inférieure et supérieure (condition adiabatique). Les figures 3a et 3b illustrent les différents éléments représentés en coupe depuis la résistance centrale 60 : il s'agit plus précisément depuis le centre de l'échantillon vers l'extérieur de la pastille : de combustible 100 placé entre deux cales 102, de la gaine 80, de l'isolant 101. Il est également considéré que les jeux sont nuls entre les pastilles et la gaine mais aussi entre la gaine et l'isolant. Le contact étant considéré comme parfait entre ces éléments, un seul mode de transfert de chaleur est considéré : la conduction.

Le circuit de refroidissement est modélisé par une température imposée à 20°C correspondant à la température de l'eau circulant dans l'échangeur comme illustré en figure 4 qui met en évidence, selon le modèle thermique, la puissance volumique injectée Pᵢₙⱼ et la conduction Cₚ quasi parfaite entre les différents matériaux (pastille, gaine, isolant), entre deux adiabatiques A_{dia}.

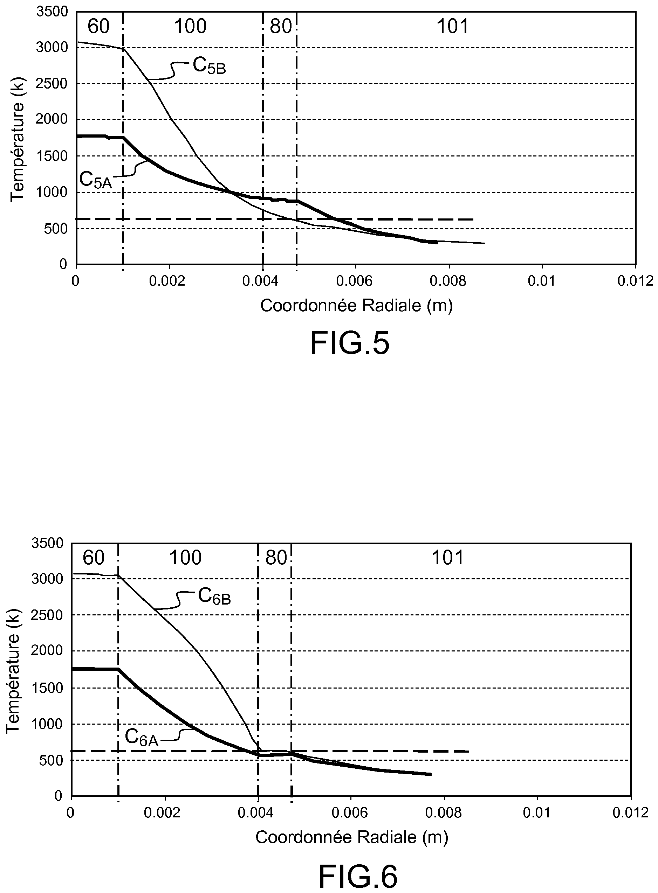

Après avoir introduit dans les modèles considérés, les propriétés thermiques des matériaux étudiés, les calculs thermiques mettent en avant les résultats détaillés sur les figure 5, figure 6 et la figure 7, respectivement pour les matériaux suivants : Al₂O₃, ZrO₂ et UO₂ comme combustibles et ce, en fonction des différentes natures et épaisseurs d'isolant. Plus précisément :
- la courbe C_{5A} est relative à un isolant d'hafnie d'épaisseur de 3 mm, la courbe C_{5B} est relative à un isolant d'alumine de 5 mm, pour un combustible Alumine ;
- la courbe C_{6A} est relative à un isolant de zircone d'épaisseur de 3 mm, la courbe C_{6B} est relative à un isolant d'alumine de 5 mm, pour un combustible Zircone ;
- la courbe C_{7A} est relative à un isolant d'hafnie d'épaisseur de 3mm, la courbe C_{7B} est relative à un isolant d'UO₂ de 5 mm, pour un combustible d'UO₂.

Ces trois figures montrent directement qu'il est possible, en fonction du type d'échantillon (Al₂O₃, ZrO₂ et UO₂) faisant office de combustible, de proposer un système d'isolant permettant d'atteindre la température gaine voulue, quel que soit le chargement thermique à coeur.

En effet, pour un simulant combustible de type alumine, la modélisation montre que pour obtenir une température à la paroi externe de la gaine de 350°C, l'isolant à utiliser est de l'alumine dense avec une épaisseur de 4 à 5 mm. L'épaisseur de cet isolant est à déterminer selon les températures au centre des pastilles. Pour un simulant combustible de type Zircone, le choix de l'isolant est de l'Hafnie dense entre 3 et 5 mm d'épaisseur selon les températures centre pastilles visées. Pour le combustible de type UO₂ vierge, d'après les températures injectées à coeur de l'échantillon, la modélisation fait ressortir l'utilisation d'un isolant soit en UO₂ soit en Hafnie entre 3 et 5 mm d'épaisseur en fonction de la température centrale et ce pour une température gaine de 350°C.

A partir de cette modélisation thermique permettant de valider l'obtention d'un gradient thermique et un principe de chauffage a priori adéquat, le Demandeur a réalisé un prototype afin de vérifier le principe général et le bon fonctionnement, notamment le chauffage résistif et l'obtention d'un gradient thermique par le biais des différents isolants et de l'utilisation d'un système de refroidissement.

Pour permettre la réalisation de ce prototype, les différents éléments ont été requis :
- une résistance permettant d'atteindre les températures souhaitées sans trop de déformations de celle-ci ;
- des pastilles percées simulant le combustible ;
- une gaine en zircaloy4 (zirconium) d'une hauteur de trois pastilles et des cales d'extrémités ;
- un jeu d'isolant ;
- deux spires, l'une de transformation pour permettre la circulation des courants induits dans la résistance, une spire d'induction ;
- un échangeur de chaleur afin de bloquer la température extérieure de l'isolant à la température de circulation de l'eau (soit 20 °C).

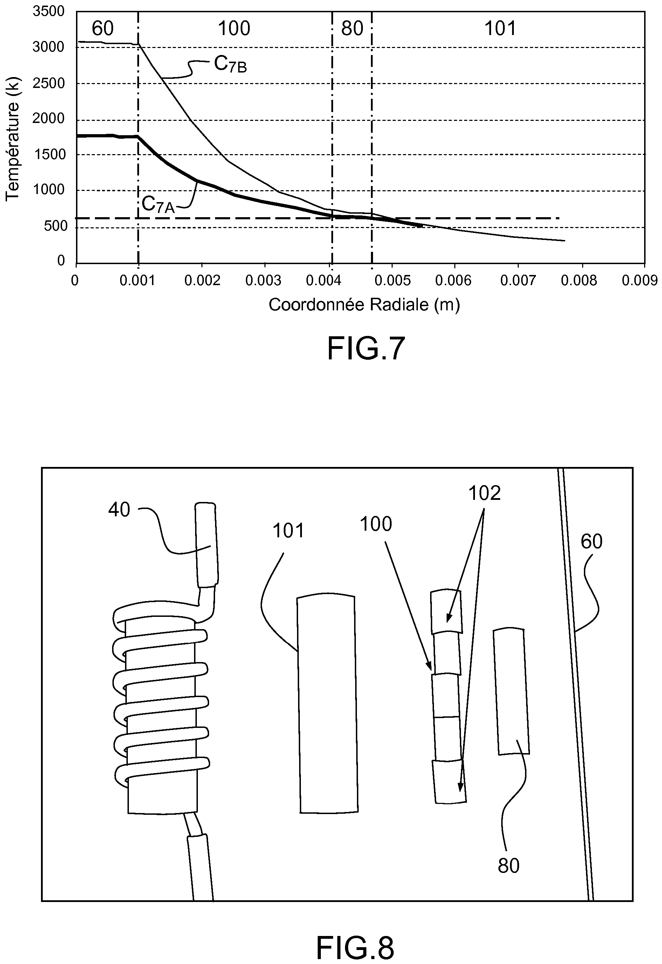

Ces éléments sont présentés sur la figure 8 : la résistance centrale en tungstène 60, la gaine 80, les trois pastilles de combustibles 100 insérées entre deux cales 102, l'isolant 101 et un échangeur à eau 40, ces différents éléments s'imbriquent les uns dans les autres formant alors le système complet permettant, à l'aide des spires, de faire chauffer les pastilles de combustible tout en refroidissant la gaine par le circuit de refroidissement. L'ensemble est intégré dans la spire de transformation

L'ensemble ainsi constitué peut être intégré dans un tube en quartz constituant une évolution du four MERARG II. La spire d'induction couple alors sur la spire de transformation, celle-ci est court-circuitée par la résistance en tungstène, traversant les cales et les pastilles combustibles. La spire de transformation, la spire d'induction et l'échangeur sont quant à eux refroidis par eau.

Un thermocouple est monté au contact de la résistance pour observer son comportement lors de la mise en puissance du dispositif.

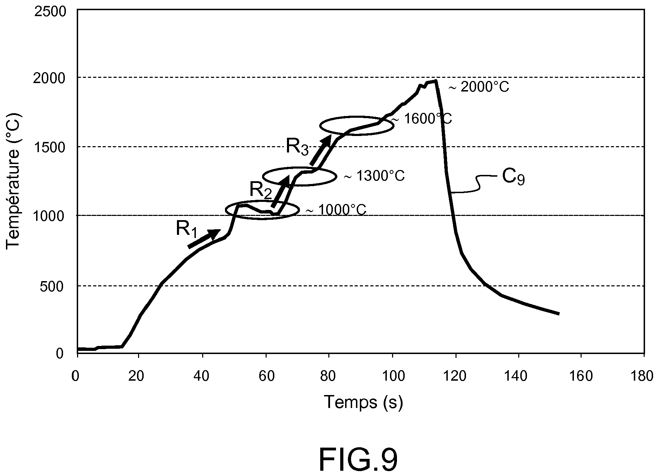

La figure 9 illustre, les cycles de température appliquée au niveau de la résistance. Trois rampes différentes ont été appliquées et quatre plateaux en température (1000°C, 1300°C, 1600°C et 2000°C) ont été maintenus entre les rampes R₁, R₂ et R₃, la courbe C₉ étant relative à la température du suscepteur. La température de la résistance est volontairement limitée à une température de 2000 °C sur un temps très court.

Ces mesures valident le principe de chauffage proposé dans la présente invention, permettant des rampes de température plus ou moins rapides, avec des paliers de température dans les gammes requises.

## Revendications

1. Ensemble comprenant un échantillon (110) et un dispositif pour générer un gradient élevé de température dans ledit échantillon ; ledit dispositif comprenant :
- une enceinte (20) à l'intérieur de laquelle est placé ledit échantillon ; et
- une résistance (60) traversant ledit échantillon ;
**caractérisé en ce que** le dispositif comprend :
- des premiers moyens d'induction (31) en périphérie de l'enceinte pour créer un champ électromagnétique ; et
- des seconds moyens d'induction (32) connectés à ladite résistance et capables de capter ledit champ électromagnétique de manière à créer un courant induit circulant dans ladite résistance.

2. Ensemble selon la revendication 1, **caractérisé en ce que** les premiers moyens d'induction comprennent au moins une première bobine.

3. Ensemble selon l'une des revendications précédentes, **caractérisé en ce que** les seconds moyens comprennent au moins une seconde bobine.

4. Ensemble selon l'une des revendications précédentes, **caractérisé en ce que** l'enceinte est un tube de quartz.

5. Ensemble selon l'une des revendications précédentes, **caractérisé en ce que** l'échantillon comprend une pastille de céramique pouvant être de Al₂O₃, ou du ZrO₂ ou une pastille de combustible nucléaire pouvant être de l'UO₂ ou du MOX.

6. Ensemble selon la revendication 5, **caractérisé en ce que** l'échantillon comprend une gaine métallique en périphérie de ladite pastille et en contact direct avec ladite pastille.

7. Ensemble selon l'une des revendications 1 à 6, **caractérisé en ce qu'**il comprend en outre un élément isolant thermique en périphérie dudit échantillon.

8. Ensemble selon la revendication 7, **caractérisé en ce que** l'échantillon comprend une pastille de céramique, l'isolant étant en alumine.

9. Ensemble selon la revendication 7, **caractérisé en ce que** l'échantillon comprend une pastille de céramique, l'isolant étant en hafnie.

10. Ensemble selon la revendication 7, **caractérisé en ce que** l'échantillon comprend un combustible pouvant être en UO₂, l'isolant pouvant être en UO₂ ou en hafnie.

11. Ensemble selon l'une des revendications précédentes, **caractérisé en ce que** la résistance est en métal réfractaire pouvant être en tungstène ou en molybdène.

12. Ensemble selon l'une des revendications précédentes, **caractérisé en ce qu'**il comprend en outre un échangeur, lesdits seconds moyens d'induction étant situés en périphérie dudit échangeur.

13. Ensemble selon la revendication 12, **caractérisé en ce que** l'échangeur comprend un système de circulation de fluide.

14. Ensemble selon l'une des revendications précédentes, **caractérisé en ce qu'**il comprend en outre des moyens de mesure de la température dudit échantillon.

15. Ensemble selon la revendication 14, **caractérisé en ce que** les moyens de mesure de la température comprennent un thermocouple.

16. Ensemble selon l'une des revendications 1 à 15, comprenant un pyromètre.

17. Ensemble selon l'une des revendications 1 à 15, comprenant une caméra infrarouge.

## Patentansprüche

1. Baugruppe, die eine Probe (110) und eine Vorrichtung zum Erzeugen eines hohen Temperaturgradienten in der Probe umfasst, wobei die Vorrichtung Folgendes umfasst:
eine Kammer (20), in der die Probe platziert ist; und
einen durch die Probe verlaufenden Widerstand (60),
**dadurch gekennzeichnet, dass** die Vorrichtung Folgendes umfasst:
erste Induktionsmittel (31) an der Peripherie der Kammer zum Erzeugen eines elektromagnetischen Feldes; und
zweite Induktionsmittel (32), die mit dem Widerstand verbunden und zum Abfangen des elektromagnetischen Feldes ausgelegt sind, um einen in dem Widerstand zirkulierenden induzierten Strom zu erzeugen.

2. Baugruppe nach Anspruch 1, **dadurch gekennzeichnet, dass** die ersten Induktionsmittel wenigstens eine erste Spule umfassen.

3. Baugruppe nach einem der vorherigen Ansprüche, **dadurch gekennzeichnet, dass** die zweiten Mittel wenigstens eine zweite Spule umfassen.

4. Baugruppe nach einem der vorherigen Ansprüche, **dadurch gekennzeichnet, dass** die Kammer eine Quarzröhre ist.

5. Baugruppe nach einem der vorherigen Ansprüche, **dadurch gekennzeichnet, dass** die Probe ein Keramikpellet umfasst, das aus Al₂O₃ oder ZrO₂ sein kann, oder ein Kernbrennstoffpellet, das aus UO₂ oder MOX sein kann.

6. Baugruppe nach Anspruch 5, **dadurch gekennzeichnet, dass** die Probe eine Metallummantelung an der Peripherie des Pellets und in direktem Kontakt mit dem Pellet aufweist.

7. Baugruppe nach einem der Ansprüche 1 bis 6, **dadurch gekennzeichnet, dass** sie ferner ein Thermoisolierelement an der Peripherie der Probe aufweist.

8. Baugruppe nach Anspruch 7, **dadurch gekennzeichnet, dass** die Probe ein Keramikpellet umfasst, wobei das Isolierelement aus Aluminium ist.

9. Baugruppe nach Anspruch 7, **dadurch gekennzeichnet, dass** die Probe ein Keramikpellet umfasst, wobei das Isolierelement aus Hafnium ist.

10. Baugruppe nach Anspruch 7, **dadurch gekennzeichnet, dass** die Probe einen Brennstoff umfasst, der aus UO₂ sein kann, wobei das Isolierelement aus UO₂ oder aus Hafnium sein kann.

11. Baugruppe nach einem der vorherigen Ansprüche, **dadurch gekennzeichnet, dass** der Widerstand aus einem hochschmelzenden Metall besteht, das Wolfram oder Molybdän sein kann.

12. Baugruppe nach einem der vorherigen Ansprüche, **dadurch gekennzeichnet, dass** sie ferner einen Austauscher umfasst, wobei sich die zweiten Induktionsmittel auf der Peripherie des Austauschers befinden.

13. Baugruppe nach Anspruch 12, **dadurch gekennzeichnet, dass** der Austauscher ein Fluidumlaufsystem umfasst.

14. Baugruppe nach einem der vorherigen Ansprüche, **dadurch gekennzeichnet, dass** sie ferner Mittel zum Messen der Temperatur der Probe umfasst.

15. Baugruppe nach Anspruch 14, **dadurch gekennzeichnet, dass** die Temperaturmessmittel ein Thermoelement umfassen.

16. Baugruppe nach einem der Ansprüche 1 bis 15, die ein Pyrometer umfasst.

17. Baugruppe nach einem der Ansprüche 1 bis 15, die eine Infrarotkamera umfasst.

## Claims

1. An assembly comprising a sample (110) and a device for generating a high temperature gradient in said sample, said device comprising:
a chamber (20), inside which said sample is placed; and
a resistor (60) passing through said sample,
**characterised in that** said device comprises:
first induction means (31) on the periphery of said chamber for creating an electromagnetic field; and
second induction means (32) connected to said resistor and designed to intercept said electromagnetic field so as to create an induced current circulating in said resistor.

2. The assembly according to claim 1, **characterised in that** said first induction means comprise at least one first coil.

3. The assembly according to any one of the preceding claims, **characterised in that** said second means comprise at least one second coil.

4. The assembly according to any one of the preceding claims, **characterised in that** said chamber is a quartz tube.

5. The assembly according to any one of the preceding claims, **characterised in that** said sample comprises a ceramic pellet that can be made from Al₂O₃ or ZrO₂ or a nuclear fuel pellet that can be made from UO₂ or MOX.

6. The assembly according to claim 5, **characterised in that** said sample comprises a metallic sheath on the periphery of said pellet and in direct contact with said pellet.

7. The assembly according to any one of claims 1 to 6, **characterised in that** it further comprises a thermal insulation element on the periphery of said sample.

8. The assembly according to claim 7, **characterised in that** said sample comprises a ceramic pellet, the insulator being made from aluminium.

9. The assembly according to claim 7, **characterised in that** said sample comprises a ceramic pellet, the insulator being made from hafnium.

10. The assembly according to claim 7, **characterised in that** said sample comprises a fuel that can be made from UO₂, where the insulator can be made from UO₂ or hafnium.

11. The assembly according to any one of the preceding claims, **characterised in that** said resistor is made of refractory metal that can be tungsten or molybdenum.

12. The assembly according to any one of the preceding claims, **characterised in that** it further comprises an exchanger, said second induction means being located on the periphery of said exchanger.

13. The assembly according to claim 12, **characterised in that** said exchanger comprises a fluid circulation system.

14. The assembly according to any one of the preceding claims, **characterised in that** it further comprises means for measuring the temperature of said sample.

15. The assembly according to claim 14, **characterised in that** said temperature measurement means comprise a thermocouple.

16. The assembly according to any one of claims 1 to 15, comprising a pyrometer.

17. The assembly according to any one of claims 1 to 15, comprising an infrared camera.
